(19) Europäisches Patentamt
European Patent Office
Office européen des brevets

(11) **EP 4 273 794 B1**

(12) **EUROPEAN PATENT SPECIFICATION**

(45) Date of publication and mention
of the grant of the patent:
**10.09.2025 Bulletin 2025/37**

(21) Application number: **21913315.4**

(22) Date of filing: **09.10.2021**

(51) International Patent Classification (IPC):
***G06T 5/50*** *(2006.01)*

(52) Cooperative Patent Classification (CPC):
**G06T 5/50;** G06T 2207/10024; G06T 2207/10048;
G06T 2207/20221

(86) International application number:
**PCT/CN2021/122842**

(87) International publication number:
**WO 2022/142570 (07.07.2022 Gazette 2022/27)**

(54) **IMAGE FUSION METHOD AND APPARATUS, IMAGE PROCESSING DEVICE, AND BINOCULAR SYSTEM**

BILDFUSIONSVERFAHREN UND -VORRICHTUNG, BILDVERARBEITUNGSVORRICHTUNG UND BINOKULARES SYSTEM

PROCÉDÉ ET APPAREIL DE FUSION D'IMAGE, DISPOSITIF DE TRAITEMENT D'IMAGE ET SYSTÈME BINOCULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2020 CN 202011601689**

(43) Date of publication of application:
**08.11.2023 Bulletin 2023/45**

(73) Proprietor: **Hangzhou Hikmicro Sensing Technology Co., Ltd.**
**Hangzhou Zhejiang 311501 (CN)**

(72) Inventors:
• **JIN, Yiru**
**Hangzhou, Zhejiang 311501 (CN)**
• **ZHANG, Hao**
**Hangzhou, Zhejiang 311501 (CN)**
• **TANG, Jie**
**Hangzhou, Zhejiang 311501 (CN)**
• **PAN, Yongyou**
**Hangzhou, Zhejiang 311501 (CN)**

(74) Representative: **BRP Renaud & Partner mbB Rechtsanwälte Patentanwälte Steuerberater**
**Königstraße 28**
**70173 Stuttgart (DE)**

(56) References cited:
EP-A1- 3 534 326          WO-A1-2019/196539
CN-A- 106 548 467        CN-A- 108 765 358
CN-A- 108 765 358        CN-A- 110 363 732
CN-A- 110 443 776        CN-A- 111 738 970
CN-A- 112 614 164        US-A1- 2020 342 275

## Description

The present application claims the priority to a Chinese patent application No. 202011601689.5 filed with the China National Intellectual Property Administration on December 30, 2020 and entitled "IMAGE FUSION METHOD AND APPARATUS, IMAGE PROCESSING DEVICE, AND BINOCULAR SYSTEM.

## Technical field

The present application relates to the technical field of image processing, in particular to an image fusion method and apparatus, an image processing device and a binocular system.

## Background

Visible light image is an image acquired by an image acquisition device according to the light reflection by a target object, and thermal imaging image is an image acquired by an image acquisition device according to the radiation of the target object itself. The visible light images contain rich detail information, but are easily influenced by lighting conditions, weather and other factors, especially when the chromaticity difference between the target object and the background is small, the target object is difficult to distinguish. The thermal imaging images mainly reflect the heat information of the target object, which can display the target object with heat well, and is less affected by lighting conditions and bad weather, however, due to the limitation of the imaging principle, the contrast of thermal imaging images is low and the detail information of the target object is poor. The fusion of the thermal imaging image and the visible light image can well compensate for the shortcomings of both images and has very high application values.

CN108765358A discloses a dual-light fusion method of visible light and infrared light, which is applied to a plug-in thermal imager system, and comprises the following steps: acquiring an infrared detection image acquired by an infrared detector of the plug-in thermal imager system; acquiring a visible light image acquired by a terminal, wherein the plug-in thermal imager transmits data with the terminal via a preset communication interface; performing image fusion processing on the infrared detection image and the visible light image to generate a dual-light fused image.

## Summary

The embodiment of the present application aims to provide an image fusion method and apparatus, an image processing device and a binocular system, so as to improve the fusion effect of visible light images and thermal imaging images.

The invention is set out in the appended set of claims.

The image fusion method and apparatus, the image processing device and the binocular system provided by the embodiment of the present application involve: after acquiring a visible light image and a thermal imaging image that are to be fused, performing a registration transformation on the visible light image and the thermal imaging image by using pre-obtained registration transformation parameters; determining a fused brightness value of a fused pixel at each position according to brightness values of pixels, at same positions in the visible light image and the thermal imaging image subjected to the registration transformation, in the visible light image and the thermal imaging image subjected to the registration transformation, and a preset brightness fusion strategy; and determining a color value of each fused pixel at each position according to the fused brightness value of the fused pixel and preset correspondences between the brightness values and the color values, and obtaining a fused image based on the color values of the fused pixels. By performing the registration transformation on the visible light image and the thermal imaging image, the fused brightness value is automatically obtained according to brightness values of pixels in the visible light image and the thermal imaging image subjected to the registration transformation, and then the color value of each pixel is determined according to the fused brightness value of each pixel, so as to obtain a fused image which can adapt to different environmental brightness, thereby improving the fusion effect of the visible light image and the thermal imaging image.

## Brief Description of the Drawings

In order to explain the embodiments of the present application and the technical solution of the prior art more clearly, a brief introduction is given below to the accompanying drawings required in the embodiments and prior art. Obviously, the drawings described below are only some embodiments of the present application, and other drawings can be obtained by those with ordinary skills in the art according to these drawings without creative effort.

Fig. 1 is a flowchart of an image fusion method according to an embodiment of the present application;

Fig. 2 is a schematic diagram of the interaction flow of each module in the image processing device according to the embodiment of the present application;

Fig. 3 is a schematic diagram of the execution flow of a target automatic registration module according to the embodiment of the present application;

Fig. 4 is a schematic diagram of the execution flow of an adaptive fusion system according to the embodiment of the present application;

Fig. 5 is a schematic structural diagram of an image fusion apparatus according to an embodiment of the present application;

Fig. 6 is a schematic structural diagram of an image processing device according to an embodiment of the present application;

Fig. 7 is a schematic structural diagram of a binocular system according to an embodiment of the present application.

**Detailed Description**

In order to make the purpose, technical solution and advantages of the present application more clear, the present application will be further described in detail with reference to the attached drawings and embodiments. Obviously, the described embodiment is only a part of the embodiments of the present application, not all the embodiments. Based on the embodiments in the present application, all other embodiments obtained by ordinary with skills in the art without creative effort belong to the protection scope of the present application.

In the related art, there are two solutions for the fusion of a visible light image and a thermal imaging image. One is to superimpose a visible light high-frequency component and a thermal imaging low-frequency component to obtain a fusion result, and the other one is to perform weighted sum on the low-frequency components in the visible light image and the thermal imaging image to obtain a low-frequency fusion component, and then superimpose the low-frequency fusion component and the high-frequency component to obtain a final fusion result.

However, both the low-frequency component and the high-frequency component are easily influenced by the ambient brightness, resulting in significant differences in the fusion results obtained by the above solutions under different brightness environments.

In order to improve the fusion effect of visible light images and thermal imaging images, the embodiment of the present application provides an image fusion method and apparatus, an image processing device, a machine-readable storage medium and a binocular system. Next, the image fusion method provided by the embodiment of the present application will be introduced firstly.

The image fusion method provided by the embodiment of the present application can be applied to an image processing device, which refers to an electronic device with an image processing function. The implementation of the image fusion method provided by the embodiment of the present application can rely on at least one of software, hardware circuits and logic circuits in the image processing device.

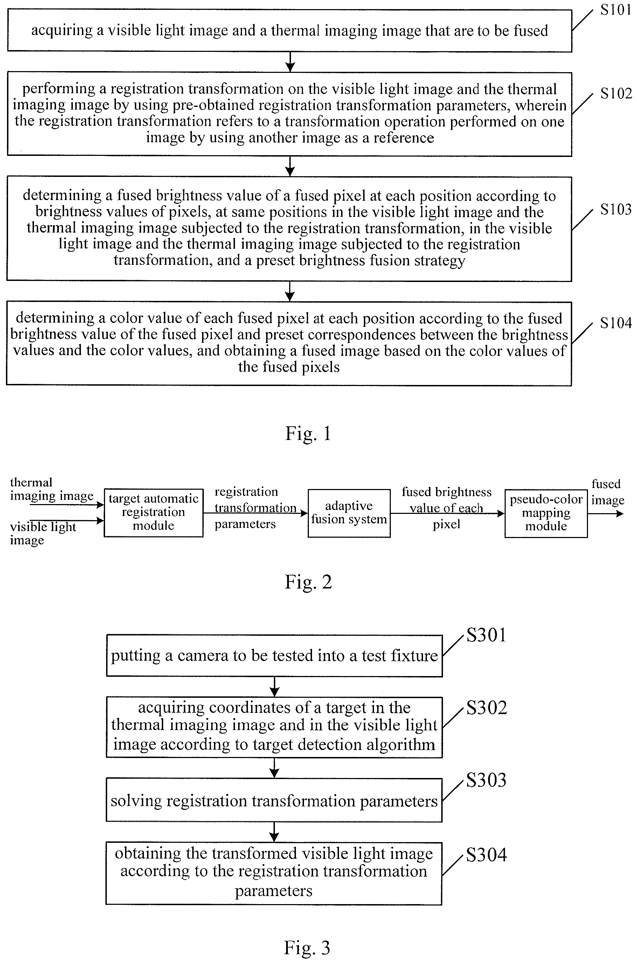

As shown in Fig. 1, an image fusion method provided by an embodiment of the present application may include the following steps.

S101, acquiring a visible light image and a thermal imaging image that are to be fused.

S102, performing a registration transformation on the visible light image and the thermal imaging image by using pre-obtained registration transformation parameters, wherein the registration transformation refers to a transformation operation performed on one image by using another image as a reference.

S103, according to brightness values of pixels, at same positions in the visible light image and the thermal imaging image subjected to the registration transformation, in the visible light image and the thermal imaging image subjected to the registration transformation, and a preset brightness fusion strategy, determining fused brightness values of fused pixels at corresponding positions.

S 104, determining a color value of each fused pixel at each position according to the fused brightness value of the fused pixel and preset correspondences between the brightness values and the color values, and obtaining a fused image based on the color values of the fused pixels.

With the application of the embodiment of the present application, after acquiring a visible light image and a thermal imaging image that are to be fused, performing a registration transformation on the visible light image and the thermal imaging image by using pre-obtained registration transformation parameters; according to brightness values of pixels, at same positions in the visible light image and the thermal imaging image subjected to the registration transformation, in the visible light image and the thermal imaging image subjected to the registration transformation, and a preset brightness fusion strategy, determining fused brightness values of fused pixels at corresponding positions; determining a color value of each fused pixel at each position according to the fused brightness value of the fused pixel and preset correspondences between the brightness values and the color values, and obtaining a fused image based on the color values of the fused pixels. By performing a registration transformation on the visible light image and the thermal imaging image, a fused brightness value is automatically obtained according to brightness values of pixels in the visible light image and the thermal imaging image subjected to the registration transformation, and then the color value of each pixel is determined according to the fused brightness value of each pixel, so as to obtain a fused image which can adapt to different environmental brightness, thereby improving the fusion effect of the visible light image and the thermal imaging image.

The visible light image and thermal imaging image that are to be fused can be acquired by a binocular camera (including an image sensor and an infrared sensor, wherein the image sensor is used to acquire visible light images and the infrared sensor is used to acquire thermal imaging images), or acquired for the same monitoring area by an image sensor and an infrared sensor that are arranged in a distributed manner. In one example, it can also be data read from a database, which was stored in the database after being collected in advance.

Since the image sensor and the infrared sensor are two different sensors, the size rules for the collected images are often not uniform. For better fusion, it is necessary to perform a registration transformation on the visible image and the thermal imaging image first, so that the size rules for both images are unified. Wherein, registration transformation refers to a transformation operation performed on one image by using another image as a reference by using pre-obtained registration transformation parameters. For example, perform the transformation operation on a thermal imaging image based on a visible light image by using the registration transformation parameters, or perform the transformation operation on a visible light image based on a thermal imaging image by using the registration transformation parameters. Specific registration transformation methods can include affine transformation, nonlinear transformation, perspective transformation, rigid body transformation, etc., and the registration transformation parameters are related to the installation positions and shooting parameters of the image sensor and the infrared sensor, and can be transformation matrices.

In an implementation of the embodiment of the present application, the process for obtaining the registration transformation parameters may specifically include the following steps.

Step 1, acquiring at least three first coordinates of a specified target in the visible light image and at least three second coordinates of the specified target in the thermal imaging image.

Step 2, calculating the registration transformation parameters by using a preset coordinate transformation model according to each of the first coordinates and each of the second coordinates.

At least three different specified targets can be set in space in advance (the shapes of these specified targets can be the same or different), and then a binocular camera (taking a binocular camera as an example, which can also be a thermal imaging camera and a visible light camera with fixed relative positions) can be used to capture visible light images and thermal imaging images containing these three specified targets. The coordinates of each specified target in the visible light image are determined to acquire respective first coordinates, and the coordinates of each specified target in the thermal imaging image are determined to acquire respective second coordinates. In one example, acquiring the at least three first coordinates of a specified target in the visible light image and the at least three second coordinates of the specified target in the thermal imaging image includes: acquiring each of visible light images and each of thermal imaging images when the specified target is located in at least three different specified positions respectively, wherein a relative position between a visible light lens for acquiring each of the visible light images and a thermal imaging lens for acquiring each of the thermal imaging images is unchanged; determining the first coordinates of the specified target in each of the visible light images and the second coordinates of the specified target in each of the thermal imaging images.

When determining the registration transformation parameters, it is first necessary to locate the specified target (also called the target) in the visual field according to the visible light image and thermal imaging image and acquire the coordinates of the specified target. Specifically, the specified target (which can be a fixed shape, such as a rectangle shape, a square shape, a circle shape, etc.) is placed at different specified positions (such as upper left, lower left, lower right, upper right, etc.) in a fixed scene, and the coordinates of the specified target (which can be the center point of the specified target) are determined in the visible light image and the thermal imaging image. Wherein, the algorithm for calculating the center point of the target can refer to a center point algorithm in the related art. In one example, the areas of the specified target in the visible light image and the thermal imaging image can be obtained through computer vision technology, such as a foreground target and background segmentation algorithm or a target recognition algorithm based on a deep learning model, and then mean values of horizontal and vertical coordinates of all pixels in the area are taken to obtain the coordinates of the center point of the specified target. In other possible implementation, key points of the specified target (points with obvious visual features, such as corners of polygons, eye key points of human faces, etc.) can also be selected as the coordinates of the specified target. The determination of key points can refer to the determination of key points in the related art, which will not be described here.

In this way, the first coordinates (coordinates in the visible light image) and the second coordinates (coordinates in the thermal imaging image) can be determined when the specified object is located in different positions. For example, if the specified positions are three positions of upper left, lower left and upper right, three first coordinates $(x_1,y_1)$, $(x_2,y_2)$, $(x_3,y_3)$ and three second coordinates $(x_1',y_1')$, $(x_2',y_2')$, $(x_3',y_3')$ can be obtained in turn.

Due to the influence of installation location, shooting parameters and other factors, there is a certain coordinate transformation relationship between the visible light image and the thermal imaging image, which is specifically represented by a coordinate transformation model. For example, the coordinate transformation model can be:

$$\begin{bmatrix} x_i \\ y_i \end{bmatrix} = k \begin{bmatrix} \cos\theta & \sin\theta \\ -\sin\theta & \cos\theta \end{bmatrix} \begin{bmatrix} x_i' \\ y_i' \end{bmatrix} + \begin{bmatrix} x_i - x_i' \\ y_i - y_i' \end{bmatrix} \qquad (1)$$

Where, $\theta$ refers to an angular relationship between the thermal imaging image and the visible light image, and k is a preset coefficient. The coordinate transformation model shown in Formula (1) is solved according to each of the first coordinates and each of the second coordinates determined above, and the registration transformation parameters can be obtained.

After performing the registration transformation on the visible light image and the thermal imaging image by using the registration transformation parameters, it is necessary to fuse the visible light image and the thermal imaging image. In this embodiment of the present application, instead of extracting the low-frequency components and high-frequency components from the visible light image and the thermal imaging image for fusion, brightness value fusion is used according to a fusion strategy in which adaptive weights are obtained according to the brightness values of the visible light image and the thermal imaging image, so that better fusion effects are achieved for the same object in different environments, thereby improving the adaptability of image fusion. Regarding to pixels at same positions in the visible light image and the thermal imaging image subjected to the registration transformation, the fused brightness value of the fused pixel in this position is determined according to the brightness values of the pixels, at same positions in the visible light image and the thermal imaging image subjected to the registration transformation, in the visible light image and the thermal imaging image subjected to the registration transformation, and the preset brightness fusion strategy. Wherein, the brightness fusion strategy can be to fuse the brightness values of pixels at same positions in two images by using a preset fusion calculation formula (such as direct addition or weighted summation), or to obtain fused brightness values by looking up a preset fusion mapping table.

In one possible embodiment, according to the brightness values of the pixels, at the same positions in the visible light image and the thermal imaging image subjected to the registration transformation, in the visible light image and the thermal imaging image subjected to the registration transformation, determining the fused brightness values of the fused pixels at the corresponding positions, includes: determining the fused brightness values of the fused pixels at the corresponding positions according to the brightness values of the pixels, at the same positions in the visible light image and the thermal imaging image subjected to the registration transformation, in the visible light image and the thermal imaging image subjected to the registration transformation, and the first preset mapping relationship, wherein the first preset mapping relationship is correspondences between the brightness values of the pixels at the same positions in the visible light image and the thermal imaging image, and the fused brightness values.

Optionally, the preset weight model can be expressed as:

$$\begin{cases} (A + (j-i)*B)^2 & j > i \\ (A-(j-i)*B)^2 & j \leq i \end{cases} \qquad (2)$$

Where A and B are preset parameters, which can be custom set according to the actual situation and can be adjusted according to the required effect, j represents the brightness value of a corresponding pixel in the visible light image, and i represents the brightness value of a corresponding pixel in the thermal imaging image.

Based on the weight model of Formula (2), the fused brightness value can be calculated by Formula (3):

$$num(i,j) = \begin{cases} \sqrt{(j*(A+(j-i)*B))^2 + i^2} & \text{if } j > i \\ \sqrt{j^2 + (i*(A-(j-i)*B))^2} & \text{if } j \leq i \\ 255 & \text{if}(num > 255) \end{cases} \qquad (3)$$

Where the result of num(i,j)num(i,j) is the final fused brightness value.

It can be understood that the weight model is not limited to the form of Formula (2), but can also be other forms of weight models related to the brightness values of visible light images and the brightness values of thermal imaging images, for example, it can also be expressed in the form of differences, such as A+(j-i)B, etc.; or mean form, such as (Ai+Bj)/2, etc.; or variance form, such as $\frac{A[i-j]^2}{2}$ $\frac{A[i-j]^2}{2}$, etc.; or polynomial model, such as Ai + Bj + CAi + Bj + C, $Ai^2+Bj^2$, etc., which are all within the protection scope of the present application. A and B are preset parameters, which can be adjusted according to the required effect. j represents the brightness value of the corresponding pixel in the visible light image, and i represents the brightness value of the corresponding pixel in the thermal imaging image.

In the process of calculating the fused brightness value, the calculation method adopted is not limited to the distance model $\sqrt{i^2+j^2}$ $\sqrt{i^2+j^2}$ in Formula (3), but also other polynomial models related to the brightness values of visible light images and the brightness values of thermal imaging images, such as: $ai + bj^3$. At this point, num (i,j) can be expressed as:

$$num(i,j)=\begin{cases} ai+bM_1j^3 & \text{if } j>i \\ aM_2i+bj^3 & \text{if } j\leq i \\ 255 & \text{if } (num>255) \end{cases}$$

The calculation of fused brightness values also uses a norm model such as $|i|+|j|$, where num (i,j) can be represented as:

$$num(i,j)=\begin{cases} |i|+M_1|j| & \text{if } j>i \\ M_2|i|+|j| & \text{if } j\leq i \\ 255 & \text{if } (num>255) \end{cases}$$

Where $M_1$, $M_2$ represent the weight models corresponding to j>i and j≤i, for example, the weight coefficient M1 can be A+(j-i)B when j>i, and the weight coefficient M2 can be A+(i-j)B when j≤i. Where a and b are the weighting coefficients of the model.

Other related models are also used to calculate the fused brightness value, which are all within the protection scope of the present application.

In one example, the model used in the calculation can be selected according to the fusion application scene, fusion style preference, fusion image effect requirements, etc.. For example, corresponding models can be set in advance for different fusion application scenes, fusion style preferences, fusion image effects, etc.. During the implementation of the image fusion method of the embodiment of the present application, fusion standard information such as fusion application scenes, fusion style preferences, fusion image effects, etc. can also be shown to the user. Based on the fusion standard information selected by the user, the corresponding model can be determined. Thus, the corresponding model is used to calculate the fused brightness value.

In an implementation of the embodiment of the present application, in order to keep as much detail information as possible in the visible light image and the temperature distribution information in the thermal imaging image, the brightness values of the visible light image and the thermal imaging image can be fused in proportion according to the brightness values of pixels at same positions in the visible light image and the thermal imaging image. When the temperature distribution information reflected by the target object in the thermal imaging image is small, the target object is more likely to be a background, thus the background detail information can be retained by increasing the fusion weight of the target object in the visible light image; however, when the temperature distribution information reflected by the target object in the thermal imaging image is large, the target object is more likely to be a high-temperature target of concern, thus the detail information of the target object, such as temperature distribution information, can be retained by increasing the fusion weight of the target object in the thermal imaging image.

In the practical application process, if a weight model is used for each pixel to calculate the fused brightness value, it will put a significant processing pressure on the computing resources, therefore the fused brightness value in various situations can be calculated in advance by using the weight model and saved as the first preset mapping relationship. In another implementation of the embodiment of the present application, S103 can specifically be as follows:

determining the fused brightness values of the fused pixels at the corresponding positions according to the brightness values of pixels, at the same positions in the visible light image and the thermal imaging image subjected to the registration transformation, in the visible light image and the thermal imaging image subjected to the registration transformation, based on a first preset mapping relationship, wherein the first preset mapping relationship is correspondences between the brightness values of the pixels at the same positions in the visible light image and the thermal imaging image, and the fused brightness values. In one example, the first preset mapping relationship may be a fusion mapping table, which records the fused brightness values corresponding to the brightness values of pixels at the same positions in the visible light image and the thermal imaging image.

In order to reduce the calculation amount during brightness value fusion and improve the operation efficiency, in an embodiment of the present application, a fusion mapping table can be established in advance, which records the fused brightness values corresponding to the brightness values of pixels at the same positions in the visible light image and the thermal imaging image, and the fused brightness values corresponding to the brightness values of pixels at the same positions in the visible light image and the thermal imaging image can be calculated by using some specific algorithms. Specifically, assuming that the range of the brightness value of visible light and the range of the brightness value of thermal imaging are both [0,255], the fusion mapping table can be a table of 256*256, and each element in the table records a fused brightness value corresponding to the brightness value indicated by the row number and the brightness value indicated by the column number.

In specific applications, after extracting the brightness value $y_R$ of a pixel in the visible light image and the brightness value $y_V$ of a pixel at the same position in the thermal imaging image, the fusion mapping table is used as a lookup table, the horizontal coordinates of the fusion mapping table represents the brightness value i corresponding to the thermal imaging image, and the vertical coordinate represents the brightness value j corresponding to the visible light image. By using (i,j) as the coordinate value and searching the mapping table, the element found is the fused brightness value.

In another implementation of the embodiment of the present application, the fused brightness values recorded in the first preset mapping relationship are obtained by weighting the brightness values of the pixels at the same positions in the visible light image and the thermal imaging image according to a weight coefficient calculated based on a preset weight model, wherein the weight model is set based on a relationship between magnitudes of the brightness values of the pixels in the visible light image and the thermal imaging image.

As mentioned above, in order to keep as much detail information as possible in the visible light image and the temperature distribution information in the thermal imaging image, the fused brightness value can be determined according to the weights of the brightness values of the pixels at same positions in the visible light image and the thermal imaging image, and the fused brightness values recorded in the first preset mapping relationship can be specifically obtained by weighting the brightness values of the visible light image and of the thermal imaging image according to the preset weight coefficient obtained based on the preset weight model.

Assuming that the brightness value of a pixel in the visible light image is j and the brightness value of a pixel at the same position in the thermal imaging image is i, if the brightness value of the pixel in the visible light image and the brightness value of the pixel at the same position in the thermal imaging image are fused in equal proportion, the fused brightness value after fusion is **Fehler! Eine Ziffer wurde erwartet.**. However, in order to adapt the fused results, and keep as much detail information in the visible light image and temperature distribution information in the thermal imaging image as possible, comparing the brightness value of the pixel in the visible light image and the brightness value of the pixel at the same position in the thermal imaging image, and fusing the brightness values according to the difference between the both brightness values and the corresponding weight coefficient. At this time, the fused brightness value can be calculated by Formula (3).

After obtaining the fused brightness value of each pixel, the color value of each pixel can be determined according to the preset correspondences between brightness values and color values. The color value refers to a value in a pseudo color space, generally RGB values, and each color value corresponds to a single brightness value. According to the fused brightness value, it corresponds to the corresponding color space, the original fusion ratio is retained, color information is superimposed on this basis, and the corresponding color value is determined after the brightness value fusion. Therefore, based on the color value of each pixel, the color transition in the fused image is natural and the effect of the fused image is natural.

In another implementation of the embodiment of the present application, S104 can specifically be: for any pixel, looking up the color value of the pixel from a preset pseudo-color mapping table based on the fused brightness value of the pixel, wherein color values corresponding to the brightness values one by one are recorded in the pseudo-color mapping table.

In order to avoid a large number of calculations when determining color values and improve the operation efficiency, in the embodiment of the present application, a pseudo-color mapping table can be established in advance, in which the color values corresponding to the brightness values one by one are recorded. Specifically, for each point (m,n) in the fused image, the fused brightness value after fusion is $y_f$, assuming that the value range of the fused brightness value is [0,255], in the corresponding pseudo-color mapping table, each vector of the pseudo-color mapping table is expressed as [1,256,3], thus each $y_f$ value obtained is mapped to a three-channel color value $(r,g,b)_f$ in the pseudo-color mapping table.

As can be seen from the above embodiments, the fused image can be automatically generated without manual intervention, and the generated fused image has a natural color transition and retains the original temperature change.

In order to facilitate understanding, the image fusion method provided by the embodiment of the present application is introduced below with specific examples. In this embodiment, the image fusion method is applied to an image processing device. In order to realize the function of image fusion, the image processing device mainly includes a target automatic registration module, an adaptive fusion system and a pseudo-color mapping module. As shown in Fig. 2, the interaction flow of each module is as follows: inputting thermal imaging images and visible light images into the target automatic registration module to obtain registration transformation parameters, inputting the registration transformation parameters into the adaptive fusion system to obtain the fused brightness value of each pixel, and then inputting the fused brightness value of each pixel into the pseudo-color mapping module, and finally outputting a fused image. The execution flow of the target automatic registration module is shown in Fig. 3, which includes: S301, putting a camera to be tested into a test fixture; S302, acquiring coordinates of a target in the thermal imaging image and in the visible light image according to target detection algorithm; S303, solving registration transformation parameters; S304, obtaining the transformed visible light image according to the registration transformation parameters.

In an example, S302 specifically includes: placing a designed rectangular target in the upper left, lower left and upper right positions in a fixed scene, the height positions of which are all adjustable, placing the designed rectangular target in corresponding positions and heights according to the focal length of the camera to ensure that it is in both the thermal imaging image and the visible light image; and detecting the positions of the central points of three rectangular boxes in the thermal imaging image and the visible light image by using an algorithm to obtain the coordinates of the target in the thermal imaging image and the visible light image respectively.

S303 can specifically be as follows: acquiring three coordinate points $(x_1,y_1)$, $(x_2,y_2)$, $(x_3,y_3)$ in the thermal imaging image and three coordinate points $(x_1',y_1')$, $(x_2',y_2')$ and $(x_3',y_3')$ in the visible light image, and establishing an affine transformation model according to the properties of affine transformation. The affine transformation model is as follows:

$$\begin{bmatrix} x_i \\ y_i \end{bmatrix} = k \begin{bmatrix} \cos\theta & \sin\theta \\ -\sin\theta & \cos\theta \end{bmatrix} \begin{bmatrix} x_i' \\ y_i' \end{bmatrix} + \begin{bmatrix} x_i - x_i' \\ y_i - y_i' \end{bmatrix} = \begin{cases} m_{11}x_i + m_{12}y_i + t_x \\ m_{21}x_i + m_{22}y_i + t_y \end{cases}$$

Where, $\theta$ refers to the angular relationship between the thermal imaging image and the visible light image, k is a preset coefficient, and $m_{11}$, $m_{12}$, $t_x$, $m_{21}$, $m_{22}$, $t_y$ are the registration transformation parameters. The registration transformation parameters are fitted according to the principle of least square method, and the calculation method is as follows:

$$\begin{cases} \begin{bmatrix} m_{11} \\ m_{12} \\ t_x \end{bmatrix} = (M^T M)^{-1} M^T \begin{bmatrix} x_1' \\ x_2' \\ x_3' \end{bmatrix} \\ \begin{bmatrix} m_{21} \\ m_{22} \\ t_y \end{bmatrix} = (M^T M)^{-1} M^T \begin{bmatrix} y_1' \\ y_2' \\ y_3' \end{bmatrix} \end{cases}$$

where,

$$M = \begin{bmatrix} x_1 & y_1 & 1 \\ x_2 & y_2 & 1 \\ x_3 & y_3 & 1 \end{bmatrix}.$$

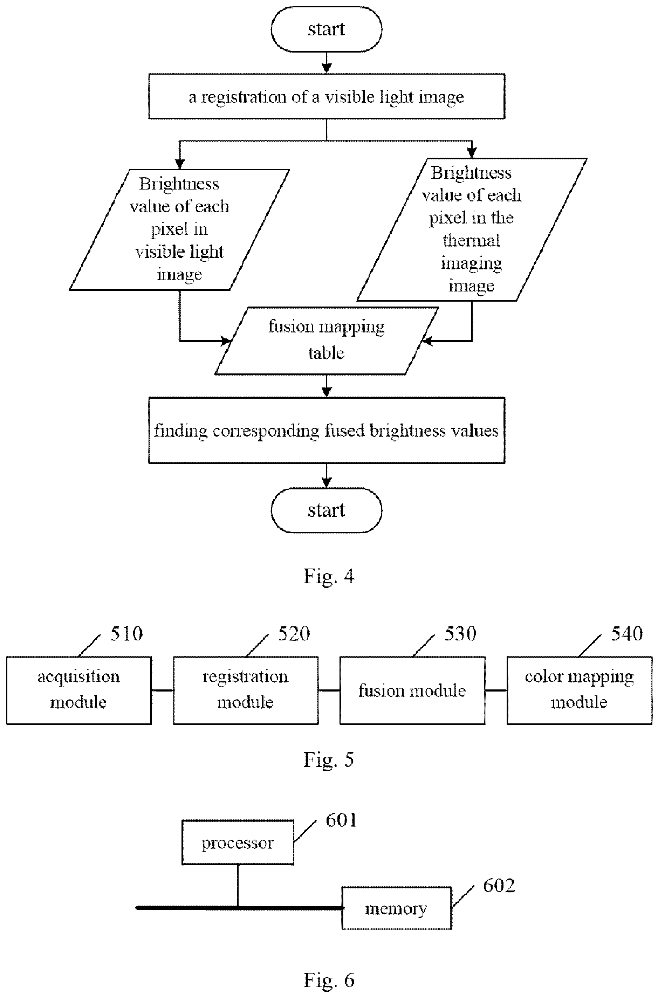

The execution flow of the adaptive fusion system is shown in Fig. 4. Extract the brightness value of each pixel of the input visible light image and thermal imaging image, and query the fusion mapping table to find corresponding fused brightness value. The fusion mapping table is established based on the fusion formula, and the fusion formula is as follows:

$$\text{num}(i,j)=\begin{cases} \sqrt{(j*(A+(j-i)*B))^2+i^2}\;\text{if}\,j>i \\ \sqrt{j^2+(i*(A-(j-i)*B))^2}\;\text{if}\,j\leq i \\ 255\;\text{if}\,(\text{num}>255) \end{cases}$$

Where, A and B are preset parameters, which can be custom set according to the actual situation and can be adjusted according to the required effect, and the result of num(i,j) is the final fused brightness value. The brightness value of a pixel in the visible light image is j, and the brightness value of a pixel at the same position in the thermal imaging image is i. Assuming that the value range of brightness values of the visible light and the value range of brightness values of the thermal imaging are both [0,255], the fusion mapping table can be a table of 256*256, and each element in the table records a fused brightness value corresponding to a brightness value shown in the row number and a brightness value shown in the column number. After extracting the brightness value $y_R$ of the pixel in the visible light image and the brightness value $y_V$ of the pixel at the same position in the thermal imaging image, the mapping table is searched using the fusion mapping table as a lookup table and using (i,j) as the coordinate values, wherein the horizontal coordinate of the fusion mapping table represents the brightness value i corresponding to the thermal imaging image, and the vertical coordinate represents the brightness value j corresponding to the visible light image, and the element found is the fused brightness value num(i,j).

After obtaining the fused brightness value of each pixel, since that the color value in the pseudo-color color space corresponds to the brightness value one by one, according to the fused brightness value, it corresponds to the corresponding color space, the original fusion ratio is retained, color information is superimposed on this basis, and the corresponding color value is determined after the brightness value fusion. Therefore, based on the color value of each pixel, the color transition in the obtained fused image is natural and the effect of the fused image is natural. Specifically, for each point (m,n) in the fused image, the fused brightness value after fusion is $y_f$, assuming that the value range of the fused brightness value is [0,255], in the corresponding pseudo-color mapping table, each vector of the pseudo-color mapping table is expressed as [1,256,3], thus each $y_f$ value obtained is mapped to a three-channel color value $(r,g,b)_f$ in the pseudo-color mapping table.

In this embodiment, the registration transformation parameters are obtained automatically using the registration transformation by means of the form of a fixed target. After the registration transformation, the adaptive fused brightness value is automatically obtained according to the brightness values of visible light and thermal imaging channels, and then the fused brightness value is directly mapped to a different color space, so as to obtain a fused image with natural color transition, maintained temperature distribution and rich details.

Corresponding to the above method embodiment, an embodiment of the present application provides an image fusion apparatus, as shown in Fig. 5, which may include:

an acquisition module 510 for acquiring a visible light image and a thermal imaging image that are to be fused;

a registration module 520 for performing a registration transformation on the visible light image and the thermal imaging image by using pre-obtained registration transformation parameters, wherein the registration transformation refers to a transformation operation performed on one image by using another image as a reference;

a fusion module 530 for determining a fused brightness value of a fused pixel at each position according to brightness values of pixels, at same positions in the visible light image and the thermal imaging image subjected to the registration transformation, in the visible light image and the thermal imaging image subjected to the registration transformation, and a preset brightness fusion strategy;

a color mapping module 540 for determining a color value of each fused pixel at each position according to the fused brightness value of the fused pixel and preset correspondences between the brightness values and the color values, and obtaining a fused image based on the color values of the fused pixels.

In a possible implementation, the apparatus further includes:

a coordinate acquisition module for acquiring at least three first coordinates of a specified target in the visible light image and at least three second coordinates of the specified target in the thermal imaging image; and

a parameter obtaining module for calculating the registration transformation parameters by using a preset coordinate transformation model according to each of the first coordinates and each of the second coordinates.

In a possible implementation, the coordinate acquisition module is specifically configured for: acquiring each of visible light images and each of thermal imaging images when the specified target is located in at least three different specified positions respectively, wherein a relative position between a visible light lens for acquiring each of the visible light images and a thermal imaging lens for acquiring each of the thermal imaging images is unchanged; and determining the first coordinates of the specified target in each of the visible light images and the second coordinates of the specified target in each of the thermal imaging images.

In a possible implementation, the fusion module is specifically configured for: determining the fused brightness values of the fused pixels at the corresponding positions according to the brightness values of the pixels, at the same positions in the visible light image and the thermal imaging image subjected to the registration transformation, in the visible light image and the thermal imaging image subjected to the registration transformation, based on a first preset mapping relationship, wherein the first preset mapping relationship is correspondences between the brightness values of the pixels at the same positions in the visible light image and the thermal imaging image, and the fused brightness values.

In a possible implementation, the fused brightness values recorded in the first preset mapping relationship are obtained by weighting the brightness values of the pixels at the same positions in the visible light image and the thermal imaging image according to a weight coefficient calculated based on a preset weight model, wherein the weight model is set based on a relationship between magnitudes of the brightness values of the pixels in the visible light image and the thermal imaging image.

In a possible implementation, the color mapping module is specifically configured for: determining, for a fused pixel at any position, the color value of the fused pixel based on the fused brightness value of the fused pixel at that position according to a second preset mapping relationship, wherein the second preset mapping relationship is one-to-one correspondences between the fused brightness values and the color values.

With the application of the embodiment of the present application, by performing a registration transformation on the visible light image and the thermal imaging image, a fused brightness value is automatically obtained according to brightness values of pixels in the visible light image and the thermal imaging image subjected to the registration transformation, and then the color value of each pixel is determined according to the fused brightness value of each pixel, so as to obtain a fused image which can adapt to different environments, thereby improving the fusion effect of the visible light image and the thermal imaging image.

An embodiment of the present application provides an image processing device, as shown in Fig. 6, which includes a processor 601 and a memory 602, wherein the memory 602 has stored therein machine executable instructions that can be executed by the processor 601 and are loaded and executed by the processor 601 to implement the method the image fusion method provided by the embodiment of the present application.

The above memory may include an RAM (Random Access Memory) or an NVM (Non-volatile Memory), such as at least one disk memory. Alternatively, the memory can also be at least one storage located far away from the aforementioned processor.

The above processor can be a general-purpose processor, including a CPU, a NP (Network Processor), etc.; it can also be a DSP (Digital Signal Processor), an ASIC (Application Specific Integrated Circuit), an FPGA (Field Programmable Gate Array) or other programmable logic devices, discrete gate or transistor logic devices, and discrete hardware components.

Data transmission between the memory 602 and the processor 601 can be performed via wired connection or wireless connection, and communication between the image processing device and other devices can be performed via wired communication interface or wireless communication interface. Fig. 6 only shown an example of data transmission via the bus, which is not limited to the specific connection mode.

With the application of the embodiment of the present application, by performing a registration transformation on the visible light image and the thermal imaging image, a fused brightness value is automatically obtained according to brightness values of pixels in the visible light image and the thermal imaging image subjected to the registration transformation, and then the color value of each pixel is determined according to the fused brightness value of each pixel, so as to obtain a fused image which can adapt to different environments, thereby improving the fusion effect of the visible light image and the thermal imaging image.

In another embodiment provided by the present application, a machine-readable storage medium is also provided, in which a computer program is stored, the computer program, when executed by a processor, causes the processor to implement the image fusion method provided by the embodiment of the present application.

In yet another embodiment provided by the present application, a computer program product containing instructions is also provided, which, when run on a platform server, causes the platform server to execute the image fusion method provided by the embodiment of the present application.

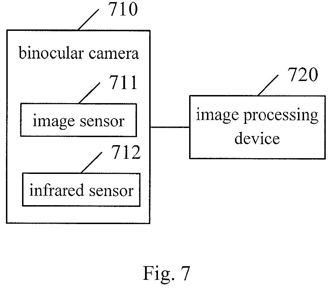

An embodiment of the present application also provides a binocular system, as shown in Fig. 7, including a binocular camera 710 and an image processing device 720; the binocular camera 710 includes an image sensor 711 and an infrared sensor 712; the image sensor 711 is configured for acquiring a visible light image; the infrared sensor 712 is configured for acquiring a thermal imaging image;

the image processing device 720 is configured for receiving the visible light image and the thermal imaging image that are to be fused sent by the binocular camera 710; performing a registration transformation on the visible light image and the thermal imaging image by using pre-obtained registration transformation parameters, wherein the registration transformation refers to a transformation operation performed on one image by using another image as a reference; determining a fused brightness value of a fused pixel at each position according to brightness values of pixels, at same positions in the visible light image and the thermal imaging image subjected to the registration transformation, in the visible light image and the thermal imaging image subjected to the registration transformation, and a preset brightness fusion strategy; and determining a color value of each fused pixel at each position according to the fused brightness value of the fused pixel and preset correspondences between the brightness values and the color values, and obtaining a fused image based on the color values of the fused pixels.

In one possible embodiment, the image processing device is specifically configured for: acquiring at least three first coordinates of a specified target in the visible light image and at least three second coordinates of the specified target in the thermal imaging image; and calculating the registration transformation parameters by using a preset coordinate transformation model according to each of the first coordinates and each of the second coordinates.

In one possible embodiment, the image processing device is specifically configured for: acquiring each of visible light images and each of thermal imaging images when the specified target is located in at least three different specified positions respectively, wherein a relative position between a visible light lens for acquiring each of the visible light images and a thermal imaging lens for acquiring each of the thermal imaging images is unchanged; and determining the first coordinates of the specified target in each of the visible light images and the second coordinates of the specified target in each of the thermal imaging images.

In a possible embodiment, the image processing device is specifically configured for: determining the fused brightness values of the fused pixels at the corresponding positions according to the brightness values of the pixels, at the same positions in the visible light image and the thermal imaging image subjected to the registration transformation, in the visible light image and the thermal imaging image subjected to the registration transformation, based on a first preset mapping relationship, wherein the first preset mapping relationship is correspondences between the brightness values of the pixels at the same positions in the visible light image and the thermal imaging image, and the fused brightness values.

In a possible embodiment, the fused brightness values recorded in the first preset mapping relationship are obtained by weighting the brightness values of the pixels at the same positions in the visible light image and the thermal imaging image according to a weight coefficient calculated based on a preset weight model, wherein the weight model is set based on a relationship between magnitudes of the brightness values of the pixels in the visible light image and the thermal imaging image.

In a possible embodiment, the image processing device is specifically configured for: determining, for a fused pixel at any position, the color value of the fused pixel based on the fused brightness value of the fused pixel at that position according to a second preset mapping relationship, wherein the second preset mapping relationship is one-to-one correspondences between the fused brightness values and the color values.

In one example, the image processing device can also realize the image fusion method described in any embodiment of the present application.

With the application of the embodiment of the present application, by performing a registration transformation on the visible light image and the thermal imaging image, a fused brightness value is automatically obtained according to brightness values of pixels in the visible light image and the thermal imaging image subjected to the registration transformation, and then the color value of each pixel is determined according to the fused brightness value of each pixel, so as to obtain a fused image which can adapt to different environments, thereby improving the fusion effect of the visible light image and the thermal imaging image.

Regarding the apparatus, the image processor, the machine-readable storage medium, the computer program product and the binocular system embodiments, the description is relatively simple because the method content involved is substantially similar to the aforementioned method embodiment, and the relevant content refer to the partial description of the method embodiment.

The above embodiments can be realized in whole or in part by software, hardware, firmware or any combination thereof. When implemented in software, it can be fully or partially implemented in the form of a computer program product. The computer program product includes one or more computer instructions. When the computer program instructions are loaded and executed on a computer, the flow or function described in the embodiment of the present application is generated in whole or in part. The computer can be a general-purpose computer, a special-purpose computer, a computer network, or other programmable devices. The computer instructions can be stored in a computer-readable storage medium or transmitted from one computer-readable storage medium to another computer-readable storage medium. For example, the computer instructions can be transmitted from a website, computer, server or data center to another website, computer or data center via wired (such as coaxial cable, optical fiber, DSL (Digital Subscriber Line)) or wireless (such as infrared, wireless, microwave, etc.). The computer-readable storage medium can be any available medium that a computer can access or a data storage device such as a server, a data center and the like that contains one or more available media integration. The available medium may be a magnetic medium (such as a floppy disk, a hard disk, a magnetic tape), an optical medium (such as a DVD (Digital Versatile Disc)), or a semiconductor medium (such as SSD (Solid State Disk)) and the like.

It should be noted that in this paper, relational terms such as first and second are only used to distinguish one entity or operation from another entity or operation, and do not necessarily require or imply that there is any such actual relationship or order between these entities or operations. Moreover, the terms "comprising", "including" or any other variation thereof are intended to cover non-exclusive inclusion, so that a process, method, article or device including a series of elements includes not only those elements, but also other elements not explicitly listed, or elements inherent to such process, method, article or equipment. Without further restrictions, an element defined by the statement "including a ..." does not exclude the existence of other identical elements in the process, method, article or device including the element.

Each embodiment in this description is described in a related way, the same and similar parts between these embodiments can be referred to each other, and each embodiment focuses on the differences from other embodiments. Especially, the embodiments of the device, the image processor, the machine-readable storage medium, the computer program product and the binocular system are basically similar to the embodiment of the method, thus the descriptions of which are relatively simple. Please refer to the description of the method implementation examples for relevant details.

**Claims**

1. An image fusion method comprising:

   acquiring a visible light image and a thermal imaging image that are to be fused (S101);
   performing a registration transformation on the visible light image and the thermal imaging image by using pre-obtained registration transformation parameters, wherein the registration transformation refers to a transformation operation performed on one image by using another image as a reference (S102);
   according to brightness values of pixels, at same positions in the visible light image and the thermal imaging image subjected to the registration transformation, in the visible light image and the thermal imaging image subjected to the registration transformation, and a preset brightness fusion strategy, determining fused brightness values of fused pixels at corresponding positions (S 103); and
   determining a color value of each fused pixel at each position according to the fused brightness value of the fused pixel and preset correspondences between the brightness values and the color values, and obtaining a fused image based on the color values of the fused pixels (S104),
   wherein according to the brightness values of the pixels, at the same positions in the visible light image and thermal imaging image subjected to the registration transformation, in the visible light image and thermal imaging image subjected to the registration transformation, and the preset brightness fusion strategy, determining the fused brightness values of the fused pixels at the corresponding positions, **characterised by**:

   determining the fused brightness values of the fused pixels at the corresponding positions according to the brightness values of the pixels, at the same positions in the visible light image and the thermal imaging image subjected to the registration transformation, in the visible light image and the thermal imaging image subjected to the registration transformation, based on a first preset mapping relationship, wherein the first preset mapping relationship is correspondences between the brightness values of the pixels at the same positions in the visible light image and the thermal imaging image, and the fused brightness values, and wherein the fused brightness values recorded in the first preset mapping relationship are obtained by weighting the brightness values of the pixels at the same positions in the visible light image and the thermal imaging image according to a weight coefficient calculated based on a preset weight model, wherein the weight model is set based on a relationship between magnitudes of the brightness values of the pixels in the visible light image and the thermal imaging image.

2. The method according to claim 1, wherein a process for obtaining the registration transformation parameters comprises:

   acquiring at least three first coordinates of a specified target in the visible light image and at least three second coordinates of the specified target in the thermal imaging image; and

calculating the registration transformation parameters by using a preset coordinate transformation model according to each of the first coordinates and each of the second coordinates.

3. The method according to claim 2, wherein acquiring the at least three first coordinates of the specified target in the visible light image and at least three second coordinates of the specified target in the thermal imaging image, comprises:

acquiring each of visible light images and each of thermal imaging images when the specified target is located in at least three different specified positions respectively, wherein a relative position between a visible light lens for acquiring each of the visible light images and a thermal imaging lens for acquiring each of the thermal imaging images is unchanged; and
determining the first coordinates of the specified target in each of the visible light images and the second coordinates of the specified target in each of the thermal imaging images.

4. The method according to claim 1, wherein the step of determining the color value of each fused pixel at each position according to the fused brightness value of the fused pixel and the preset correspondences between the brightness values and the color values, comprises:
determining, for a fused pixel at any position, the color value of the fused pixel based on the fused brightness value of the fused pixel at that position according to a second preset mapping relationship, wherein the second preset mapping relationship is one-to-one correspondences between the fused brightness values and the color values.

5. An image fusion apparatus comprising:

an acquisition module (510) configured for acquiring a visible light image and a thermal imaging image that are to be fused;
a registration module (520) configured for performing a registration transformation on the visible light image and the thermal imaging image by using pre-obtained registration transformation parameters, wherein the registration transformation refers to a transformation operation performed on one image by using another image as a reference;
a fusion module (530) configured for determining a fused brightness value of a fused pixel at each position according to brightness values of pixels, at same positions in the visible light image and the thermal imaging image subjected to the registration transformation, in the visible light image and the thermal imaging image subjected to the registration transformation, and a preset brightness fusion strategy; and
a color mapping module (540) configured for determining a color value of each fused pixel at each position according to the fused brightness value of the fused pixel and preset correspondences between the brightness values and the color values, and obtaining a fused image based on the color values of the fused pixels, wherein the fusion module (530) is **characterised by**:

determining the fused brightness values of the fused pixels at the corresponding positions according to the brightness values of the pixels, at the same positions in the visible light image and the thermal imaging image subjected to the registration transformation, in the visible light image and the thermal imaging image subjected to the registration transformation, based on a first preset mapping relationship, wherein the first preset mapping relationship is correspondences between the brightness values of the pixels at the same positions in the visible light image and the thermal imaging image, and the fused brightness values, and wherein the fused brightness values recorded in the first preset mapping relationship are obtained by weighting the brightness values of the pixels at the same positions in the visible light image and the thermal imaging image according to a weight coefficient calculated based on a preset weight model, wherein the weight model is set based on a relationship between magnitudes of the brightness values of the pixels in the visible light image and the thermal imaging image.

6. The apparatus according to claim 5, wherein the apparatus further comprises:

a coordinate acquisition module configured for acquiring at least three first coordinates of a specified target in the visible light image and at least three second coordinates of the specified target in the thermal imaging image; and
a parameter obtaining module configured for calculating the registration transformation parameters by using a preset coordinate transformation model according to each of the first coordinates and each of the second coordinates.

7. The apparatus according to claim 6, wherein the coordinate acquisition module is specifically configured for: acquiring each of visible light images and each of thermal imaging images when the specified target is located in at least three different specified positions respectively, wherein a relative position between a visible light lens for acquiring each of the visible light images and a thermal imaging lens for acquiring each of the thermal imaging images is unchanged; and determining the first coordinates of the specified target in each of the visible light images and the second coordinates of the specified target in each of the thermal imaging images.

8. The apparatus according to claim 5, wherein the color mapping module is specifically configured for: determining, for a fused pixel at any position, the color value of the fused pixel based on the fused brightness value of the fused pixel at that position according to a second preset mapping relationship, wherein the second preset mapping relationship is one-to-one correspondences between the fused brightness values and the color values.

**Patentansprüche**

1. Bildfusionsverfahren, umfassend:

   Erfassen eines Bildes im sichtbaren Licht und eines Wärmebildes, die fusioniert werden sollen (S101);
   Durchführen einer Registrierungstransformation an dem Bild im sichtbaren Licht und dem Wärmebild unter Verwendung von vorab erhaltenen Registrierungstransformationsparametern, wobei sich die Registrierungstransformation auf eine Transformationsoperation bezieht, die an einem Bild unter Verwendung eines anderen Bildes als Referenz durchgeführt wird (S102);
   Bestimmen, gemäß Helligkeitswerten von Pixeln, an selben Positionen in dem Bild im sichtbaren Licht und dem Wärmebild, die der Registrierungstransformation unterzogen wurden, in dem Bild im sichtbaren Licht und dem Wärmebild, die der Registrierungstransformation unterzogen wurden, und einer voreingestellten Helligkeitsfusionsstrategie, von fusionierten Helligkeitswerten fusionierter Pixel an entsprechenden Positionen (S103); und
   Bestimmen eines Farbwerts jedes fusionierten Pixels an jeder Position gemäß dem fusionierten Helligkeitswert des fusionierten Pixels und von voreingestellten Entsprechungen zwischen den Helligkeitswerten und den Farbwerten, und Erhalten eines fusionierten Bildes auf Basis der Farbwerte der fusionierten Pixel (S104),
   Bestimmen, gemäß den Helligkeitswerten der Pixel, an denselben Positionen in dem Bild im sichtbaren Licht und dem Wärmebild, die der Registrierungstransformation unterzogen wurden, in dem Bild im sichtbaren Licht und dem Wärmebild, die der Registrierungstransformation unterzogen wurden, und der voreingestellten Helligkeitsfusionsstrategie, der fusionierten Helligkeitswerte der fusionierten Pixel an den entsprechenden Positionen, **gekennzeichnet durch**:

   Bestimmen der fusionierten Helligkeitswerte der fusionierten Pixel an den entsprechenden Positionen gemäß den Helligkeitswerten der Pixel, an denselben Positionen in dem Bild im sichtbaren Licht und dem Wärmebild, die der Registrierungstransformation unterzogen wurden, in dem Bild im sichtbaren Licht und dem Wärmebild, die der Registrierungstransformation unterzogen wurden, auf Basis einer ersten voreingestellten Abbildungsbeziehung, wobei es sich bei der ersten voreingestellten Abbildungsbeziehung um Entsprechungen zwischen den Helligkeitswerten der Pixel an denselben Positionen in dem Bild im sichtbaren Licht und dem Wärmebild und den fusionierten Helligkeitswerten handelt, und
   wobei die in der ersten voreingestellten Abbildungsbeziehung aufgezeichneten fusionierten Helligkeitswerte durch Gewichten der Helligkeitswerte der Pixel an denselben Positionen in dem Bild im sichtbaren Licht und dem Wärmebild gemäß einem Gewichtungskoeffizienten erhalten werden, der auf Basis eines voreingestellten Gewichtungsmodells berechnet wird, wobei das Gewichtungsmodell auf Basis einer Beziehung zwischen Größen der Helligkeitswerte der Pixel in dem Bild im sichtbaren Licht und dem Wärmebild eingestellt wird.

2. Verfahren nach Anspruch 1, wobei ein Prozess zum Erhalten der Registrierungstransformationsparameter umfasst:

   Erfassen von mindestens drei ersten Koordinaten eines spezifizierten Ziels in dem Bild im sichtbaren Licht und von mindestens drei zweiten Koordinaten des spezifizierten Ziels im Wärmebild; und
   Berechnen der Registrierungstransformationsparameter unter Verwendung eines voreingestellten Koordinatentransformationsmodells gemäß jeder der ersten Koordinaten und jeder der zweiten Koordinaten.

3. Verfahren nach Anspruch 2, wobei Erfassen der mindestens drei ersten Koordinaten des spezifizierten Ziels in dem Bild im sichtbaren Licht und mindestens drei zweiten Koordinaten des spezifizierten Ziels im Wärmebild umfasst:

Erfassen jedes von Bildern im sichtbaren Licht und jedes von Wärmebildern, wenn sich das spezifizierte Ziel jeweils an mindestens drei unterschiedlichen spezifizierten Positionen befindet, wobei eine relative Position zwischen einer Linse für sichtbares Licht zum Erfassen jedes der Bilder im sichtbaren Licht und einer Wärmebildlinse zum Erfassen jedes der Wärmebilder unverändert bleibt; und

Bestimmen der ersten Koordinaten des spezifizierten Ziels in jedem der Bilder im sichtbaren Licht und der zweiten Koordinaten des spezifizierten Ziels in jedem der Wärmebilder.

4. Verfahren nach Anspruch 1, wobei der Schritt zum Bestimmen des Farbwerts jedes fusionierten Pixels an jeder Position gemäß dem fusionierten Helligkeitswert des fusionierten Pixels und den voreingestellten Entsprechungen zwischen den Helligkeitswerten und den Farbwerten umfasst:

Bestimmen, für ein fusioniertes Pixel an einer beliebigen Position, des Farbwerts des fusionierten Pixels auf Basis des fusionierten Helligkeitswerts des fusionierten Pixels an dieser Position gemäß einer zweiten voreingestellten Abbildungsbeziehung, wobei es sich bei der zweiten voreingestellten Abbildungsbeziehung um Eins-zu-Eins-Entsprechungen zwischen den fusionierten Helligkeitswerten und den Farbwerten handelt.

5. Bildfusionseinrichtung, umfassend:

ein Erfassungsmodul (510), das konfiguriert ist zum Erfassen eines Bildes im sichtbaren Licht und eines Wärmebildes, die fusioniert werden sollen;

ein Registrierungsmodul (520), das konfiguriert ist zum Durchführen einer Registrierungstransformation an dem Bild im sichtbaren Licht und dem Wärmebild unter Verwendung von vorab erhaltenen Registrierungstransformationsparametern, wobei sich die Registrierungstransformation auf eine Transformationsoperation bezieht, die an einem Bild unter Verwendung eines anderen Bildes als Referenz durchgeführt wird;

ein Fusionsmodul (530), das konfiguriert ist zum Bestimmen eines fusionierten Helligkeitswerts eines fusionierten Pixels an jeder Position gemäß Helligkeitswerten von Pixeln, an selben Positionen in dem Bild im sichtbaren Licht und dem Wärmebild, die der Registrierungstransformation unterzogen wurden, in dem Bild im sichtbaren Licht und dem Wärmebild, die der Registrierungstransformation unterzogen wurden, und einer voreingestellten Helligkeitsfusionsstrategie; und

ein Farbabbildungsmodul (540), das konfiguriert ist zum Bestimmen eines Farbwerts jedes fusionierten Pixels an jeder Position gemäß dem fusionierten Helligkeitswert des fusionierten Pixels und von voreingestellten Entsprechungen zwischen den Helligkeitswerten und den Farbwerten, und Erhalten eines fusionierten Bildes auf Basis der Farbwerte der fusionierten Pixel,

wobei das Fusionsmodul (530) **gekennzeichnet ist durch**:

Bestimmen der fusionierten Helligkeitswerte der fusionierten Pixel an den entsprechenden Positionen gemäß den Helligkeitswerten der Pixel, an denselben Positionen in dem Bild im sichtbaren Licht und dem Wärmebild, die der Registrierungstransformation unterzogen wurden, in dem Bild im sichtbaren Licht und dem Wärmebild, die der Registrierungstransformation unterzogen wurden, auf Basis einer ersten voreingestellten Abbildungsbeziehung, wobei es sich bei der ersten voreingestellten Abbildungsbeziehung um Entsprechungen zwischen den Helligkeitswerten der Pixel an denselben Positionen in dem Bild im sichtbaren Licht und dem Wärmebild und den fusionierten Helligkeitswerten handelt, und

wobei die in der ersten voreingestellten Abbildungsbeziehung aufgezeichneten fusionierten Helligkeitswerte **durch** Gewichten der Helligkeitswerte der Pixel an denselben Positionen in dem Bild im sichtbaren Licht und dem Wärmebild gemäß einem Gewichtungskoeffizienten erhalten werden, der auf Basis eines voreingestellten Gewichtungsmodells berechnet wird, wobei das Gewichtungsmodell auf Basis einer Beziehung zwischen Größen der Helligkeitswerte der Pixel in dem Bild im sichtbaren Licht und dem Wärmebild eingestellt wird.

6. Einrichtung nach Anspruch 5, wobei die Einrichtung weiter umfasst:

ein Koordinatenerfassungsmodul, das konfiguriert ist zum Erfassen von mindestens drei ersten Koordinaten eines spezifizierten Ziels in dem Bild im sichtbaren Licht und von mindestens drei zweiten Koordinaten des spezifizierten Ziels im Wärmebild; und

ein Parametererhaltemodul, das konfiguriert ist zum Berechnen der Registrierungstransformationsparameter unter Verwendung eines voreingestellten Koordinatentransformationsmodells gemäß jeder der ersten Koordinaten und jeder der zweiten Koordinaten.

7. Einrichtung nach Anspruch 6, wobei das Koordinatenerfassungsmodul speziell konfiguriert ist zum: Erfassen jedes von Bildern im sichtbaren Licht und jedes von Wärmebildern, wenn sich das spezifizierte Ziel jeweils an mindestens drei unterschiedlichen spezifizierten Positionen befindet, wobei eine relative Position zwischen einer Linse für sichtbares Licht zum Erfassen jedes der Bilder im sichtbaren Licht und einer Wärmebildlinse zum Erfassen jedes der Wärmebilder unverändert bleibt; und Bestimmen der ersten Koordinaten des spezifizierten Ziels in jedem der Bilder im sichtbaren Licht und der zweiten Koordinaten des spezifizierten Ziels in jedem der Wärmebilder.

8.  Einrichtung nach Anspruch 5, wobei das Farbabbildungsmodul speziell konfiguriert ist zum: Bestimmen, für ein fusioniertes Pixel an einer beliebigen Position, des Farbwerts des fusionierten Pixels auf Basis des fusionierten Helligkeitswerts des fusionierten Pixels an dieser Position gemäß einer zweiten voreingestellten Abbildungsbeziehung, wobei es sich bei der zweiten voreingestellten Abbildungsbeziehung um Eins-zu-Eins-Entsprechungen zwischen den fusionierten Helligkeitswerten und den Farbwerten handelt.

**Revendications**

1.  Procédé de fusion d'image comprenant :

    l'acquisition d'une image de lumière visible et d'une image d'imagerie thermique qui sont à fusionner (S101) ;
    la réalisation d'une transformation de recalage sur l'image de lumière visible et l'image d'imagerie thermique en utilisant des paramètres de transformation de recalage pré-obtenus, dans lequel la transformation de recalage fait référence à une opération de transformation effectuée sur une image en utilisant une autre image comme référence (S102) ;
    en fonction des valeurs de luminosité des pixels, aux mêmes positions dans l'image de lumière visible et l'image d'imagerie thermique soumises à la transformation de recalage, dans l'image de lumière visible et l'image d'imagerie thermique soumises à la transformation de recalage, et une stratégie de fusion de luminosité prédéfinie, la détermination de valeurs de luminosité fusionnées des pixels fusionnés aux positions correspondantes (S103) ; et
    la détermination d'une valeur de couleur de chaque pixel fusionné à chaque position en fonction de la valeur de luminosité fusionnée du pixel fusionné et de correspondances prédéfinies entre les valeurs de luminosité et les valeurs de couleur, et l'obtention d'une image fusionnée sur la base des valeurs de couleur des pixels fusionnés (S104),
    dans lequel, en fonction des valeurs de luminosité des pixels, aux mêmes positions dans l'image de lumière visible et l'image d'imagerie thermique soumises à la transformation de recalage, dans l'image de lumière visible et l'image d'imagerie thermique soumises à la transformation de recalage, et la stratégie de fusion de luminosité prédéfinie, la détermination des valeurs de luminosité fusionnées des pixels fusionnés aux positions correspondantes,
    **caractérisé par** :

    la détermination des valeurs de luminosité fusionnées des pixels fusionnés aux positions correspondantes en fonction des valeurs de luminosité des pixels, aux mêmes positions dans l'image de lumière visible et l'image d'imagerie thermique soumises à la transformation de recalage, dans l'image de lumière visible et l'image d'imagerie thermique soumises à la transformation de recalage, sur la base d'une première relation de mappage prédéfinie, dans lequel la première relation de mappage prédéfinie établit des correspondances entre les valeurs de luminosité des pixels aux mêmes positions dans l'image de lumière visible et l'image d'imagerie thermique, et les valeurs de luminosité fusionnées, et
    dans lequel les valeurs de luminosité fusionnées superposées dans la première relation de mappage prédéfinie sont obtenues en pondérant les valeurs de luminosité des pixels aux mêmes positions dans l'image de lumière visible et l'image d'imagerie thermique selon un coefficient de pondération calculé sur la base d'un modèle de pondération prédéfini, dans lequel le modèle de pondération est défini sur la base d'une relation entre les grandeurs des valeurs de luminosité des pixels dans l'image en lumière visible et l'image d'imagerie thermique.

2.  Procédé selon la revendication 1, dans lequel un processus d'obtention des paramètres de transformation de recalage comprend :

    l'acquisition d'au moins trois premières coordonnées d'une cible spécifiée dans l'image de lumière visible et d'au moins trois secondes coordonnées de la cible spécifiée dans l'image d'imagerie thermique ; et
    le calcul des paramètres de transformation de recalage en utilisant un modèle de transformation de coordonnées prédéfini en fonction de chacune des premières coordonnées et de chacune des secondes coordonnées.

3. Procédé selon la revendication 2, dans lequel l'acquisition des au moins trois premières coordonnées de la cible spécifiée dans l'image de lumière visible et des au moins trois secondes coordonnées de la cible spécifiée dans l'image d'imagerie thermique comprend :

l'acquisition de chacune des images de lumière visible et de chacune des images d'imagerie thermique lorsque la cible spécifiée est située dans au moins trois positions spécifiées différentes respectivement, dans lequel une position relative entre une lentille de lumière visible pour acquérir chacune des images de lumière visible et une lentille d'imagerie thermique pour acquérir chacune des images d'imagerie thermique est inchangée ; et la détermination des premières coordonnées de la cible spécifiée dans chacune des images de lumière visible et des secondes coordonnées de la cible spécifiée dans chacune des images d'imagerie thermique.

4. Procédé selon la revendication 1, dans lequel l'étape de détermination de la valeur de couleur de chaque pixel fusionné à chaque position en fonction de la valeur de luminosité fusionnée du pixel fusionné et des correspondances prédéfinies entre les valeurs de luminosité et les valeurs de couleur, comprend :
la détermination, pour un pixel fusionné à n'importe quelle position, de la valeur de couleur du pixel fusionné sur la base de la valeur de luminosité fusionnée du pixel fusionné à cette position selon une seconde relation de mappage prédéfinie, dans lequel la seconde relation de mappage prédéfinie établit des correspondances biunivoques entre les valeurs de luminosité fusionnées et les valeurs de couleur.

5. Appareil de fusion d'image, comprenant :

un module d'acquisition (510) configuré pour acquérir une image de lumière visible et une image d'imagerie thermique qui sont à fusionner ;
un module de recalage (520) configuré pour effectuer une transformation de recalage sur l'image de lumière visible et l'image d'imagerie thermique en utilisant des paramètres de transformation de recalage pré-obtenus, dans lequel la transformation de recalage fait référence à une opération de transformation effectuée sur une image en utilisant une autre image comme référence ;
un module de fusion (530) configuré pour déterminer une valeur de luminosité fusionnée d'un pixel fusionné à chaque position en fonction de valeurs de luminosité des pixels, aux mêmes positions dans l'image de lumière visible et l'image d'imagerie thermique soumises à la transformation de recalage, dans l'image de lumière visible et l'image d'imagerie thermique soumises à la transformation de recalage, et une stratégie de fusion de luminosité prédéfinie ; et
un module de mappage de couleurs (540) configuré pour déterminer une valeur de couleur de chaque pixel fusionné à chaque position en fonction de la valeur de luminosité fusionnée du pixel fusionné et des correspondances prédéfinies entre les valeurs de luminosité et les valeurs de couleur, et l'obtention d'une image fusionnée sur la base des valeurs de couleur des pixels fusionnés,
dans lequel le module de fusion (530) est **caractérisé par** :

la détermination des valeurs de luminosité fusionnées des pixels fusionnés aux positions correspondantes en fonction des valeurs de luminosité des pixels, aux mêmes positions dans l'image de lumière visible et l'image d'imagerie thermique soumises à la transformation de recalage, dans l'image de lumière visible et l'image d'imagerie thermique soumises à la transformation de recalage, sur la base d'une première relation de mappage prédéfinie, dans lequel la première relation de mappage prédéfinie établit des correspondances entre les valeurs de luminosité des pixels aux mêmes positions dans l'image de lumière visible et l'image d'imagerie thermique, et les valeurs de luminosité fusionnées, et
dans lequel les valeurs de luminosité fusionnées superposées dans la première relation de mappage prédéfinie sont obtenues en pondérant les valeurs de luminosité des pixels aux mêmes positions dans l'image de lumière visible et l'image d'imagerie thermique selon un coefficient de pondération calculé sur la base d'un modèle de pondération prédéfini, dans lequel le modèle de pondération est défini sur la base d'une relation entre les grandeurs des valeurs de luminosité des pixels dans l'image en lumière visible et l'image d'imagerie thermique.

6. Appareil selon la revendication 5, dans lequel l'appareil comprend en outre :

un module d'acquisition de coordonnées configuré pour acquérir au moins trois premières coordonnées d'une cible spécifiée dans l'image de lumière visible et au moins trois secondes coordonnées de la cible spécifiée dans l'image d'imagerie thermique ; et

un module d'obtention de paramètres configuré pour calculer les paramètres de transformation de recalage en utilisant un modèle de transformation de coordonnées prédéfini en fonction de chacune des premières coordonnées et de chacune des secondes coordonnées.

7. Appareil selon la revendication 6, dans lequel le module d'acquisition de coordonnées est plus précisément configuré pour : acquérir chacune des images de lumière visible et chacune des images d'imagerie thermique lorsque la cible spécifiée est située dans au moins trois positions spécifiées différentes respectivement, dans lequel une position relative entre une lentille de lumière visible pour acquérir chacune des images de lumière visible et une lentille d'imagerie thermique pour acquérir chacune des images d'imagerie thermique est inchangée ; et déterminer les premières coordonnées de la cible spécifiée dans chacune des images de lumière visible et les secondes coordonnées de la cible spécifiée dans chacune des images d'imagerie thermique.

8. Appareil selon la revendication 5, dans lequel le module de mappage de couleurs est plus précisément configuré pour : déterminer, pour un pixel fusionné à n'importe quelle position, la valeur de couleur du pixel fusionné sur la base de la valeur de luminosité fusionnée du pixel fusionné à cette position selon une seconde relation de mappage prédéfinie, dans lequel la seconde relation de mappage prédéfinie établit des correspondances biunivoques entre les valeurs de luminosité fusionnées et les valeurs de couleur.

acquiring a visible light image and a thermal imaging image that are to be fused    S101

performing a registration transformation on the visible light image and the thermal imaging image by using pre-obtained registration transformation parameters, wherein the registration transformation refers to a transformation operation performed on one image by using another image as a reference    S102

determining a fused brightness value of a fused pixel at each position according to brightness values of pixels, at same positions in the visible light image and the thermal imaging image subjected to the registration transformation, in the visible light image and the thermal imaging image subjected to the registration transformation, and a preset brightness fusion strategy    S103

determining a color value of each fused pixel at each position according to the fused brightness value of the fused pixel and preset correspondences between the brightness values and the color values, and obtaining a fused image based on the color values of the fused pixels    S104

Fig. 1

thermal imaging image → | target automatic registration module | → registration transformation parameters → | adaptive fusion system | → fused brightness value of each pixel → | pseudo-color mapping module | → fused image

visible light image

Fig. 2

putting a camera to be tested into a test fixture    S301

acquiring coordinates of a target in the thermal imaging image and in the visible light image according to target detection algorithm    S302

solving registration transformation parameters    S303

obtaining the transformed visible light image according to the registration transformation parameters    S304

Fig. 3

Fig. 4

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011601689

- CN 108765358 A